Europäisches Patentamt

(19) European Patent Office

Office européen des brevets

(11) Publication number: **0 104 472**
**B1**

(12) **EUROPEAN PATENT SPECIFICATION**

(45) Date of publication of patent specification: **31.05.89**

(21) Application number: **83108516.2**

(22) Date of filing: **30.08.83**

(51) Int. Cl.⁴: **G 11 B 23/04, G 11 B 23/02**

(54) **Recording tape cartridge.**

(30) Priority: **01.09.82 JP 133265/82**
**10.09.82 JP 158292/82**
**17.03.83 JP 37472/83**

(43) Date of publication of application:
**04.04.84 Bulletin 84/14**

(45) Publication of the grant of the patent:
**31.05.89 Bulletin 89/22**

(84) Designated Contracting States:
**DE FR GB**

(56) References cited:
**EP-A-0 027 653**
**DE-A-2 114 294**
**DE-A-2 259 699**
**GB-A-1 584 341**
**US-A-3 410 500**
**US-A-3 921 927**
**US-A-4 052 020**

**PATENTS ABSTRACTS OF JAPAN, vol. 8, no.**
**79 (P-267)1516r, 11th April 1984; & JP - A - 58**
**222 473 (SANSHIYOU GIKEN K.K.) 24-12-1983**

(73) Proprietor: **Hitachi Maxell Ltd.**
**No 1-1-88, Ushitora Ibaraki-shi**
**Osaka-fu (JP)**

(72) Inventor: **Sasaki, Shigeo**
**2-4, Nishisakaidani-cho Ohharano Nishikyo-ku**
**Kyoto-shi Kyoto-fu (JP)**
Inventor: **Yamamoto, Osamu**
**54-14, Takagaki-cho**
**Takatsuki-shi Osaka-fu (JP)**
Inventor: **Kishimoto, Akio**
**25-49, Kishinoshita Terado-cho**
**Mukou-shi Kyoto-fu (JP)**

(74) Representative: **Selting, Günther, Dipl.-Ing. et al**
**Deichmannhaus am Hauptbahnhof**
**D-5000 Köln 1 (DE)**

Courier Press, Leamington Spa, England.

## Description

The present invention relates to a recording tape cartridge, and, more particularly, to an improvement of hubs for winding a recording tape accommodated in the recording tape cartridge.

In a magnetic recording tape cartridge having a magnetic recording tape and a pair of hubs for winding the recording tape therearound, each of the hubs must be made with high accuracy with respect to the out-of roundness and flatness of the cylindrical surface of the hub for assuring correct running of the recording tape without deviation of the recording tape in a vertical direction. However, despite that the hubs are solid, conventionally each of hubs is molded by one integrated body by one molding process, therefore the hub tends to be deformed with sink mark formed on the cylindrical surface due to thermal deformation during the molding process, thereby lowering the accuracy of the out-of roundness and flatness or verticality of the cylindrical surface of the hubs. In a case where a magnetic recording tape is wound on the deformed hubs, the magnetic recording tape is also badly deformed by the deformed cylindrical surface, thereby resulting in unsteady tape running which causes deviation of the recording track and undesired recording and reproducing characteristics.

A recording tape cartridge of the type as defined in the precharacterizing part of claim 1 is known from US—A—4 052 020. Said known recording tape cartridge has a hub consisting of an inner body and an outer ring. If, in moulding the inner body, a sink valley occurs in the circumferential surface of said inner body, such sink valley will be covered by the outer ring which forms an exactly cylindrical winding surface for the magnetic tape. However, there is a risk that the outer ring will slip on the inner body because the contacting surfaces of the inner body and the outer ring are both generally cylindrical surfaces. Therefore, in the known hub structure, there is a risk that the outer ring will slip on the inner body particularly when quick forwarding and reverse of the tape are repeated.

It is the object of the present invention to provide a recording tape cartridge of the type as defined in the precharacterizing part of claim 1 in which the hub is prevented from slipping and separation of the inner body and the outer ring.

This problem is solved, according to the invention, with the features contained in the characterizing part of claim 1.

The recording disk cartridge of the invention enables to assure correct running of the recording tape without deviation of the recording track and assures that the tape can be wound correctly in a roll without deformation of the recording tape.

Embodiments of the present invention will be described hereunder with reference to the drawings in which

Fig. 1 is a perspective view of a magnetic recording tape cartridge according to the present invention,

Fig. 2 is a top plan view showing an embodiment of a hub assembly used in the magnetic recording tape cartridge shown in Fig. 1,

Fig. 3 is a cross sectional view along the line A—A in Fig. 2,

Fig. 4 is a cross sectional view along the line B—B in Fig. 2,

Fig. 5 is a plan view of an inner body shown in Fig. 2,

Fig. 6 is a plan view of an outer ring shown in Fig. 2,

Fig. 7 is a partial enlarged plan view showing an essential portion of the hub assembly shown in Fig. 2,

Fig. 8 is a plan view of a further embodiment of a hub assembly according to the present invention,

Fig. 9 is a graph showing an example of a distortion on an outer cylindrical surface of a hub assembly of a recording tape cartridge according to the present invention,

Fig. 10 is a graph showing an example of a distortion on an outer cylindrical surface of a hub of a conventional recording tape cartridge,

Figs. 11 through 16 are cross sectional views showing an example of a way of molding a hub assembly according to the present invention,

Fig. 17 is a cross sectional view showing an essential portion of a modification of a way of molding a hub assembly according to the present invention,

Fig. 18 is a top plan view of another embodiment of the hub assembly according to the present invention,

Fig. 19 is a cross sectional view showing a further embodiment of the hub assembly according to the present invention,

Fig. 20 is a cross sectional view showing a further embodiment of the hub assembly according to the present invention,

Fig. 21 is a top plan view showing an outer member of a further embodiment of the hub assembly according to the present invention,

Fig. 22 is a cross sectional view taken along the line C—C in Fig. 21,

Fig. 23 is a top plan view showing a further embodiment of the hub assembly according to the present invention in which the outer member shown in Fig. 21 is assembled with an inner member, and

Fig. 24 is a cross sectional view of the hub assembly taken along the line D—D in Fig. 23.

### Detailed Description of the Preferred Embodiments

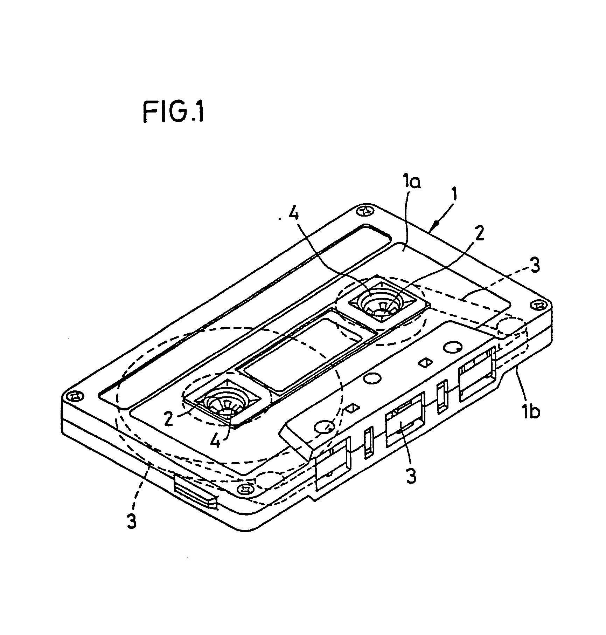

Referring to Fig. 1, there is shown a magnetic recording tape cartridge 1 having a pair of drive shaft insertion holes 2 defined through a top wall 1a and a bottom wall 1b in a known manner. A pair of hubs 4 are rotatably mounted in the cartridge 1 with the central holes 5 aligned with the drive shaft insertion holes 2. A magnetic recording tape 3 is wound around the cylindrical surface of the hubs 4 in rolls with the both end portions of the recording tape engaged with engaging members (not shown) of the hubs 4 and the magnetic recording tape can be released from one hub and taken up by another hub, running along the front surface of the cartridge 1.

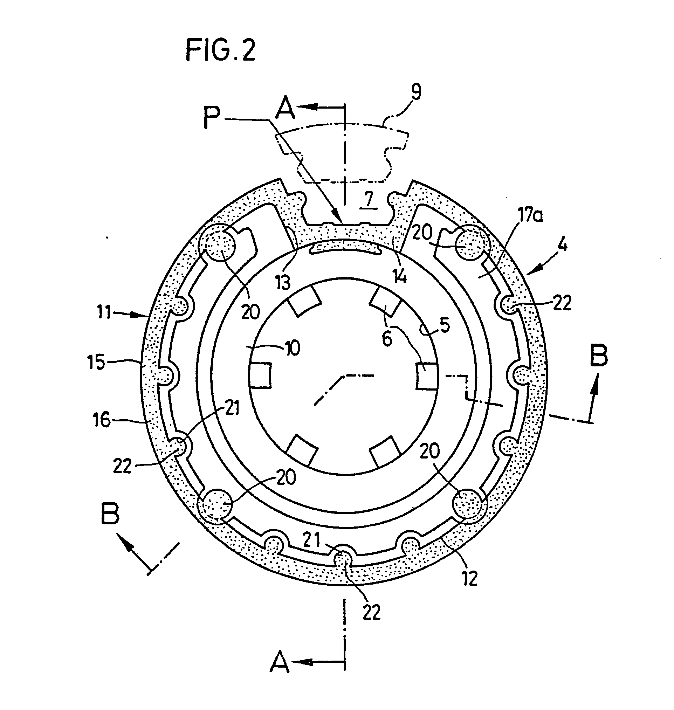

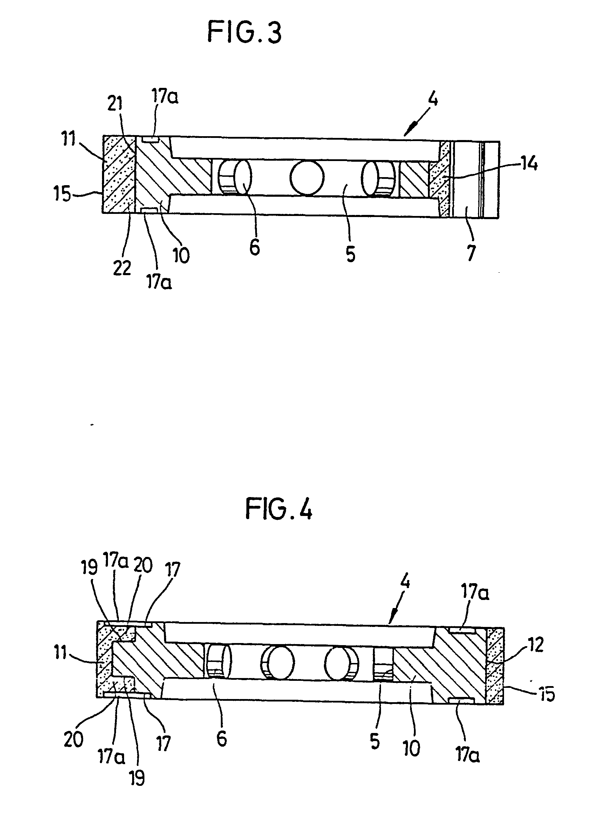

As shown in Figs. 2 and 3, each of the hubs 4 has six projecting members 6 projected radially inward direction from the inner surface defining the central hole 5. A recess 7 is defined on the cylindrical surface of the hub 4 for receiving a clamping member 9 made of an elastic member so that one end of the recording tape 3 can be clamped by the clamping member 9 fitted in the recess 7.

Referring to Figs. 2 through 6, each of the hub assembly 4 comprises an inner body 10 having rather a large thickness in an axial direction of the hub for forming the essential portion of the hub 4 and an outer ring 11 which is thin in a radial direction and fixedly fitted with the outer cylindrical surface of the inner body 10 so as to provide an outer cylindrical part of the hub assembly 4.

The inner body 10 comprises the central hole 5 at its central part and the projecting members 6. A recess 13 is defined on the outer cylindrical face of the inner body 10. The outer ring 11 comprises a wall member 14 for defining said recess 7 and being engaged in the recess 13 of the inner body 10 and a ring member 16 to provide the outer cylindrical surface of the hub assembly 4 with the both ends 16a connected with the both ends of the wall member 14. The outer cylindrical surface 15 of the ring member 16 has an accurate out-of roundness or circularity and an accurate verticality in the axial direction.

In Fig. 2, the dotted portion shows the outer ring 11.

More specifically, the inner body 10 and the outer ring 11 are formed by plastic resin materials with different colors by bi-color resin molding method. Preferably, the inner body 10 is primarily molded by an upper die and a lower die, subsequently the inner body 10 with the lower die is separated from the upper die, then the lower die with the inner body 10 is transferred directly below a second upper die for making the outer ring 11. After the lower die and the second upper die are assembled together, by the assembled dies, the outer ring 11 is molded around the inner body 10 which is used as a core, then the inner body and the outer ring 11 are adhered by fusing their boundary surfaces. The inner body 10 and the outer ring 11 are molded by a similar plastic resin material such as polyacetal resin with different colors. In plastic molding, there tend to be formed sink marks and a trace of a gate near the injection gate, therefore, especially for molding the outer ring 11, the injection gate P is defined in the bottom portion of the clamping recess 7.

In a case where the ring portion 16 of the outer ring 11 is too thick, sink marks occur in the outer cylindrical surface of the outer ring 11 and to the contrary it is too thin, the outer ring 11 is apt to be deformed due to the effect of the sink mark of the inner body. To avoid such deficiency, the thickness of the ring portion 16 of the outer ring 11 may be 0.1 mm through 5 mm, preferably 0.5 mm through 2.5 mm and specifically 1.5 mm.

The hub assembly 4 shown in the embodiment is provided with an arrangement for preventing a displacement between the inner body 10 and the outer ring 11 in an axial direction and a separation therebetween in a radial direction.

As shown in Figs. 2 and 3, on the top and the bottom end surfaces 17 of the inner body 10 four stepped recesses 19 are formed extending inwardly from the outer cylindrical surface 12 at the quadrisetion points in a circumferential direction. Generally annular recesses 17a are defined on both end surfaces of the inner body 10 so as to decrease friction between the end surfaces of the hub assembly 4 and slip sheets (not shown) laid on the inner surface of the cartridge, thereby facilitating smooth running of the hub assembly 4. On the other hand, on the ring portion 16 of the outer ring 11, four engaging member 20 in the form of semi-circular plate are projectingly formed in the inward direction from the inner cylindrical surface of the ring portion 16 at the positions corresponding to the stepped recesses 19, so that the engaging members 20 can be fitted in the stepped recesses 19 in a face to face contacting manner when the inner body 10 is combined with the outer ring 11 to prevent a displacement between the outer ring and the inner body in a vertical direction. A plurality of short cylindrical slots 21 are formed in the outer circumferential edge portions of the inner body 10 in the vertical direction with a suitable interval. On the other hand, a plurality of projections 22 are formed on the inner peripheral edge portions of the outer ring 11 so that the projections 22 are strictly fitted in the corresponding slots 21, thereby preventing separation of the outer ring 11 from the inner body 10 during and after the molding process to avoid occurrence of the distortion and errors in the out-of roundness of the cylindrical surface of the outer ring 11. As the projections 22 are constricted on the connecting portions to the inner cylindrical face of the outer ring 11, occurrence of sink mark on the outer cylindrical edge of the outer ring 11 corresponding to the projections 22 can be effectively avoided.

A dovetail groove 23 is defined in the bottom edge portion of the recess 13 through the inner body 10 in the axial direction of the inner body 10. Corresponding to the dovetail groove 23, an engaging member 24 is formed on the wall member 14 which defines a bottom part of the recess 7 so that the engaging member 24 is strictly fitted in the dovetail groove 23 when the inner body 10 and the outer ring 11 are molded. By this arrangement, the wall member 14 is not separated from the inner ring 11 in the radial direction.

According to the hub assembly described above, after the inner ring 10 is molded primarily, the thin outer ring 11 is subsequently molded around the inner body 10, the outer ring 11 can be manufactured with high accuracy of out-of roundness and verticality of the annular surface thereof. Therefore, even if there occurs sink mark on the peripheral surface of the inner body 10, the effect of the sink mark does not appear on the outer cylindrical surface of the hub assembly so that accuracy of the out-of roundness and the verticality of the hub assembly can be assured. Furthermore, since the inner body 10 and the outer ring 11 have different colors, it is advantageous in a reversible recording tape cartridge as shown in the embodiment, to make it easy to recognize a relative position between the rewinding hub and the taken up hub. In addition, rotational direction of the hub assembly can easily be recognized by such different colors between the inner body 10 the outer ring 11. Such different colors between the inner body and outer ring also increases effect of design of external appearance of the hub assembly.

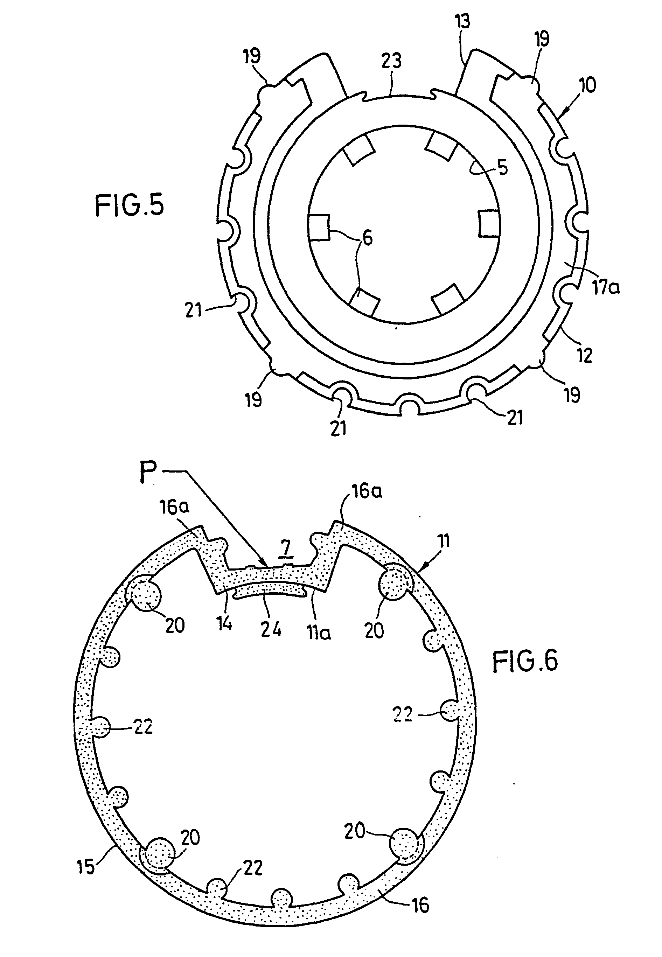

As shown in Fig. 6 a bottom wall surface 11a of the outer ring 11 which is opposite side of the recess 7 has an arcuated shape conforming to the arcuated face of the cylindrical surface of the inner body 10.

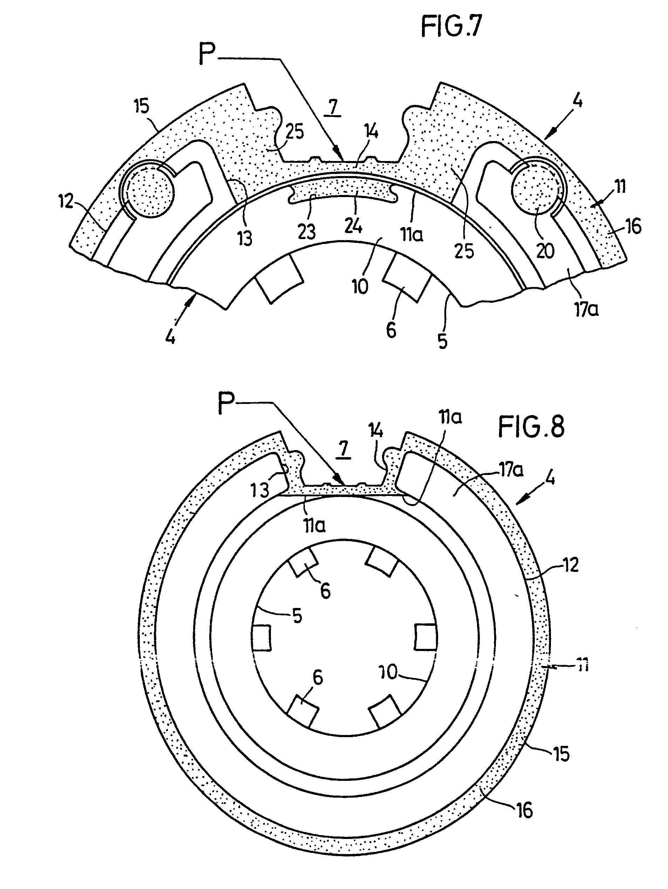

In another embodiment of the hub assembly shown in Fig. 7, both side walls 25 for defining the recess 7 have a large thickness in the circumferential direction so as to facilitate running of plastic resin material from the injection gate P situated at the bottom of the recess 7 towards the ring portion 16 during the molding process of the outer ring 11, thereby improving accuracy of shape of the hub assembly.

A further embodiment of the hub assembly according to the present invention is shown in Fig. 8, wherein the inner surface of the outer ring 11 and the outer surface of the inner body 10 are formed by simple cylindrical surfaces so that they are combined together in surface to surface contact relation. In this embodiment, separation of the inner body and the outer ring can be prevented. Also, displacement between the inner body and the outer ring can be prevented. In this embodiment, opposite to the recess 7, the wall surface 11a of the outer ring 11 and the part of the outer surface of the inner body 10 are made flat, so as to be combined together.

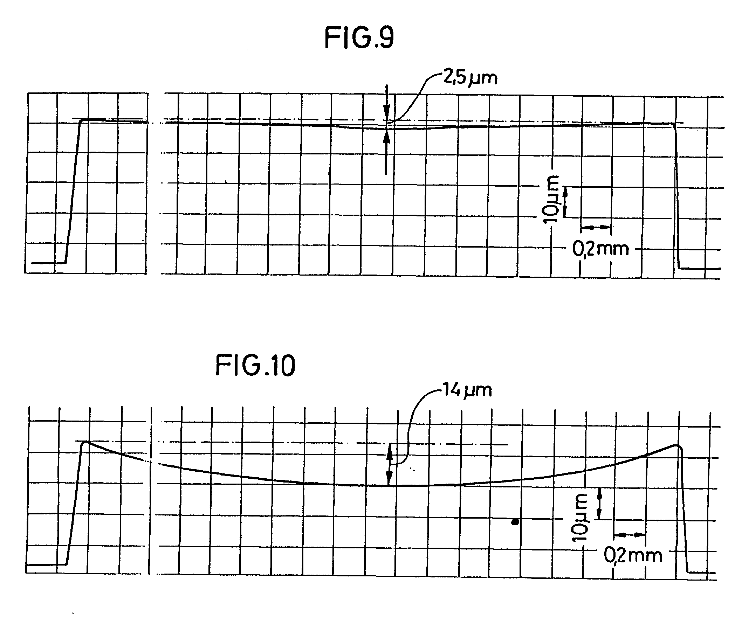

In order to recognize the verticality of the cylindrical surface of the hub assembly 4 according to the present invention, roughness of the hub assembly was measured by scanning a contact tip of a surface roughness tester along the cylindrical surface of the hub, swinging the contact tip by 3.98 mm in the axial direction of the hub. The result of the measurement is shown in Fig. 9 in which the scale of the vertical axis and horizontal axis is enlarged by 1000 times from the real measured value.

A measurement was made in the similar way as described above about a conventional hub molded by a single integrated body. The result of the measurement is shown in Fig. 10.

According to the results of the both measurements, the maximum distortion in the radial direction of the cylindrical surface of the hub assembly according to the present invention was 2.5 μm, while the maximum distortion of the conventional hub was 14 μm. Thus, the hub assembly according to the present invention is improved in that distortion of the cylindrical surface of the hub assembly is decreased to 1/5.6 compared with the distortion occurred in the conventional hub.

A recording/reproducing characteristic of a magnetic recording tape cartridge using the hub assemblies according to the present invention was checked. The magnetic recording tape cartridge according to the present invention was mounted in a recording/reproducing apparatus, then a pair of exactly same sine wave signals of 6.3 KHz were simultaneously recorded on two tracks of the left and right channels on the magnetic recording tape respectively, checking that phase displacement does not occur between the two sine wave signals by a phase meter. The recording of the signals are made over the entire length of the recording tape. After the recording tape was rewound, the recorded sine wave signals of the left and right channels were reproduced while the phase displacement between the both reproduced signals were measured by the phase meter so as to check the fluctuation of the recording/reproducing characteristic caused by the distortion or error of the verticality of the cylindrical surface of the hub assembly. In the meantime, the output wave forms of the reproduced signals were checked by an oscilloscope or a pen recorder. The same measurement as described above was made on a magnetic recording tape cartridge using the conventional hub to check the phase difference between the reproduced signals of the left and right channels. As a result of the measurement, it becomes apparent that the phase difference of the signals of the right and left channels is relatively large at the beginning and the ending of the recording tape due to the distortion in the cylindrical surface of the hub. However, the maximum value of the phase difference was 40 in the conventional recording tape cartridge, while the phase difference was 20 in the recording tape cartridge according to the present invention. Thus, according to the present invention, the recording and reproducing characteristics can be effectively improved.

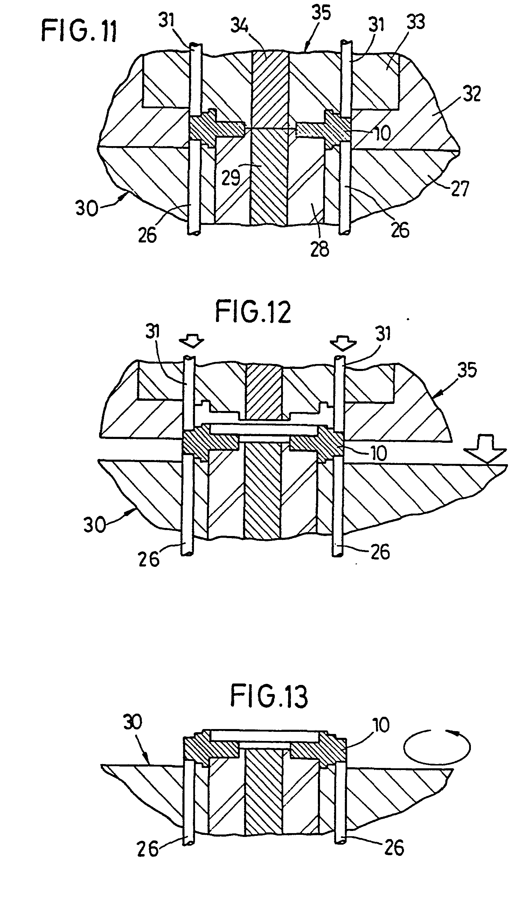

A way of molding of the hub assembly as described above will be explained in detail with reference to Figs. 11 to 16.

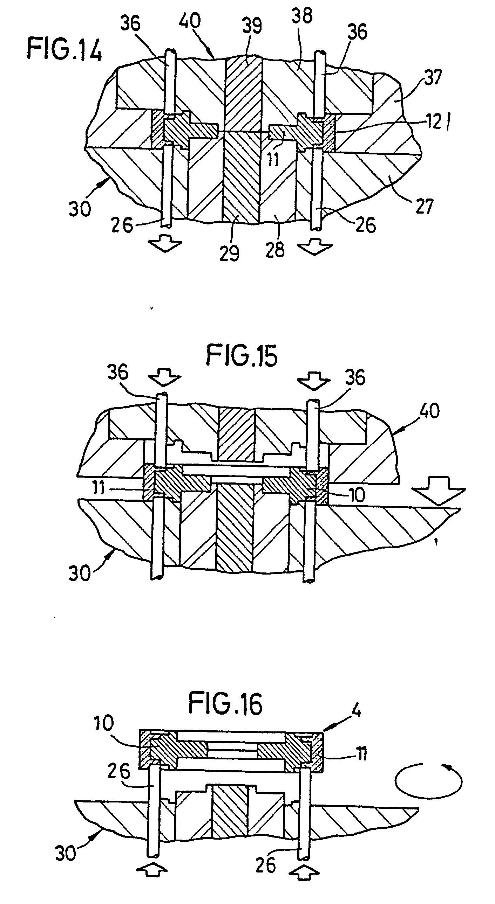

Figs. 11 to 13 show the primary molding process of the inner body 10 and Figs. 14 and 16 show the secondary molding process of the outer ring 11. As a die assembly there are provided a lower movable die 30 used for forming the lower surface of the inner body 10 and the lower surface of the outer ring 11, an upper die 35 for molding the inner body 10 and an upper die 40 for molding the outer ring 11. The lower movable die 30 comprises four pushing pins 26 and cores 27, 28 and 29 for forming the respective lower surfaces of the inner body 10 and the outer ring 11. The upper die 35 comprises four pushing pins 31 corresponding to the pushing pins 26 in the lower movable die 30 and cores 32, 33 and 34 for forming the cylindrical surface and the upper surface of the inner body 10 including the recess 7. The upper die 40 comprises four pushing pins 36 and cores 37, 38 and 39 for forming the outer cylindrical surface and the upper surface of the outer ring 11 including the recess 7. The movable die 30 is rotatable in a horizontal plane and is normally situated remote from the upper die 35 and the upper die 40 for the outer ring.

In Fig. 11, the movable die 30 is assembled with the upper die 35 for the inner body, subsequently white plastic resin material is injected in the cavity defined by the dies 30 and 35 to mold the inner body 10. During this process, the pushing pins 26 are moved upwardly and the pushing pins 31 are moved downwardly to form the respective stepped faces 19 on the top and bottom faces of the inner ring 10 at the respective quadrisected points on the outer cylindrical surface portion of the inner body 10 by the end surfaces of the pushing pins 26 and 31.

In Fig. 12, the dies 30 and 35 are separated after the inner body 10 is cooled and cured up to such a condition that the inner body can be taken out of the dies. In this process, the pushing pins 31 of the upper die 35 are projected downwardly so as to separate the inner body 10 with the movable die 30 from the upper die 35.

Subsequently, as shown in Fig. 13, after the movable die 30 is separated from the upper die 35, the spool runner is pushed out of the die, then the movable die 30 is moved from the upper die to a remote position with the inner body 10 contained in the movable die.

In Fig. 14, the movable die 30 containing the inner body 10 is moved just below the upper die 40 for the outer ring 11, then the movable die 30 is assembled with the upper die 40. Subsequently, the pushing pins 26 are downwardly retracted slightly. Prior to that step, also the lower ends of the pushing pins 36 were located slightly higher than the stepped face 19. Then, the plastic resin materials of yellow color for the secondary molding are injected in the dies 30 and 40 to mold the outer ring 11. In this process, the engaging members 20 are formed in the gaps between both opposed ends of the pushing pins 26 and 36 so that the engaging members 20 are projected radially inwardly from the inside edge of the outer ring 11.

In Fig. 15, after the outer ring 11 is cured, the dies 30 and 40 are separated. In this process, the pushing pins 36 of the upper die 40 are moved downwardly to separate the hub assembly 4 with the movable die 30 from the upper die 40. Subsequently, the hub assembly 4 is separated from the movable die 30 with the spool runner for the secondary molding by projecting the pushing pins 26 provided in the movable die.

Thereafter, the movable die 30 is moved just below the upper die 35 for the inner body as shown in Fig. 11. By repeating the steps as described above, a plurality of hub assemblies having two colors can be continuously manufactured by bicolor molding. According to the molding process as described above, the hub assemblies having the completely same configuration on both of the top side and the bottom side can be manufactured.

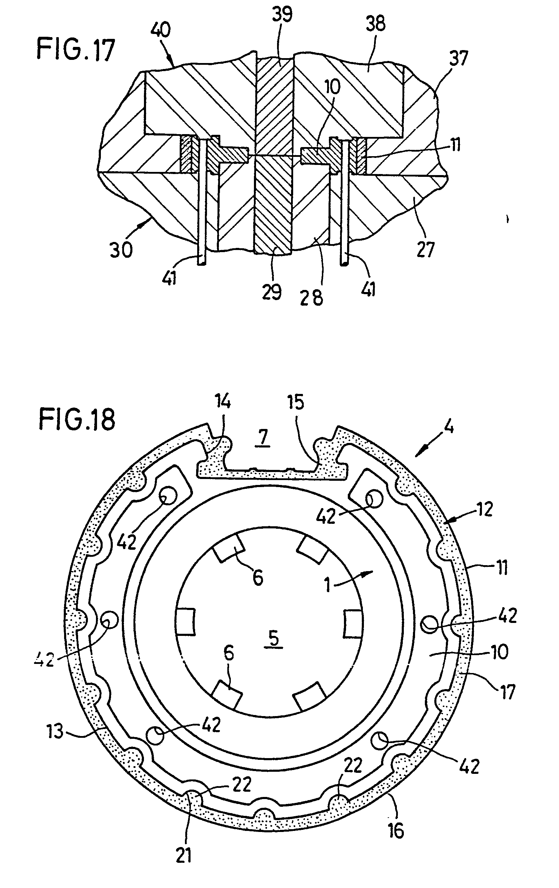

In place of the pushing pins 31 and 36, as shown in Fig. 17, a plurality of pins 41 penetrating through and projected from the movable die 30 can be used for separating the molded hub assembly from the respective upper dies 35 and 40 by using the engaging force between the inner body 10 and the pins 41. Preferably the pins 41 may be tapered in such a manner that the diameter of the pins 41 becomes large in a direction of the separation of the movable die 30. The pin 41 may be a straight cylindrical shape. The hub assembly molded by the way shown in Fig. 17, a plurality of holes 42 are defined in the inner body 10 as shown in Fig. 18. As shown in Fig. 18, the stepped faces 19 and the engaging members 20 connecting to the stepped face 19 may be omitted. Furthermore in the present invention, the provision of the slots 21 and the projections 22 is not essential.

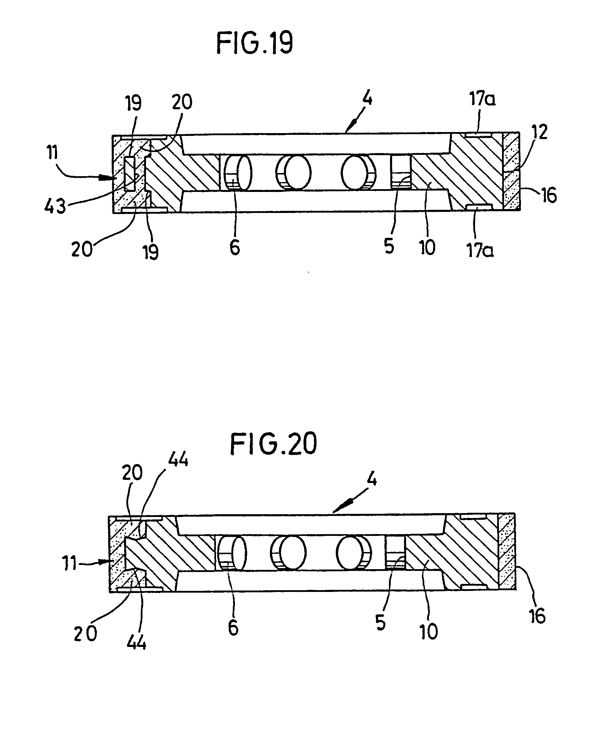

As shown in Fig. 19, in order to prevent the displacement in the vertical direction and the separation in the radial direction between the inner body 10 and the outer ring 11, through holes 43 are defined between the opposed stepped faces 19 so that the molding material can be injected in the through holes 43. Further, recesses 44 also may be defined between the opposed stepped faces 19 so that the engagement between the engaging members 20 and the stepped faces 19 can be reinforced.

In a case where different materials are used for the inner body and the outer ring, for example, poly acetal resin and acrylonitrile-butadien-stylene copolymer resin can be used.

The movable die 30 may be moved in a linearly reciprocal manner.

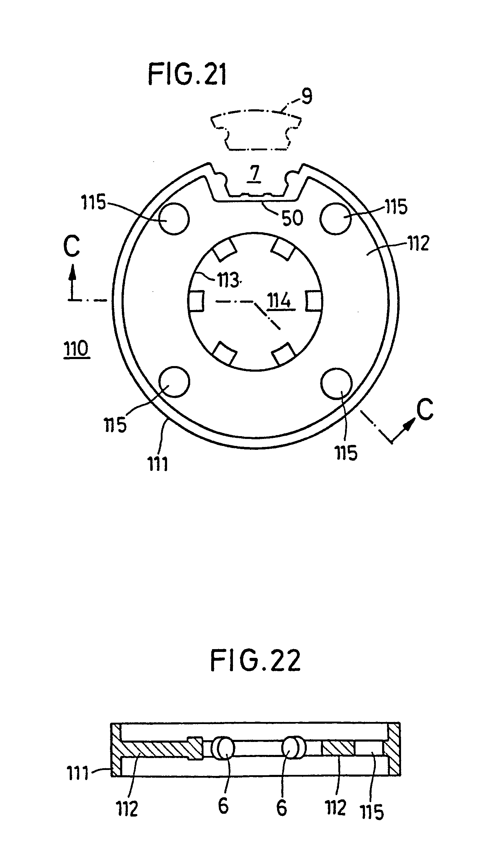

A still further embodiment of the hub assembly according to the present invention is shown in Figs. 21 through 24. In Figs. 21 and 22, a first molded body 110 is formed by an outer thin cylindrical member 111 for winding the magnetic recording tape, an annular plate member 112 connected with the inner cylindrical surface of the cylindrical member 111 at the center in an axial direction and six projecting members 6 projected inwardly from the inner wall 113 defining a central hole 114. The recess 7 for receiving the clamping member 9 is defined in the outer peripheral part of the first molded body 110 in the same way as shown in the embodiments described above.

In order to prevent occurrence of sink mark on the outer cylindrical surface, the cylindrical member 111 is thin having a thickness generally equal to the thickness of the annual plate member 112. In the annular plate member 112, a plurality of holes 115 are defined at an equal interval.

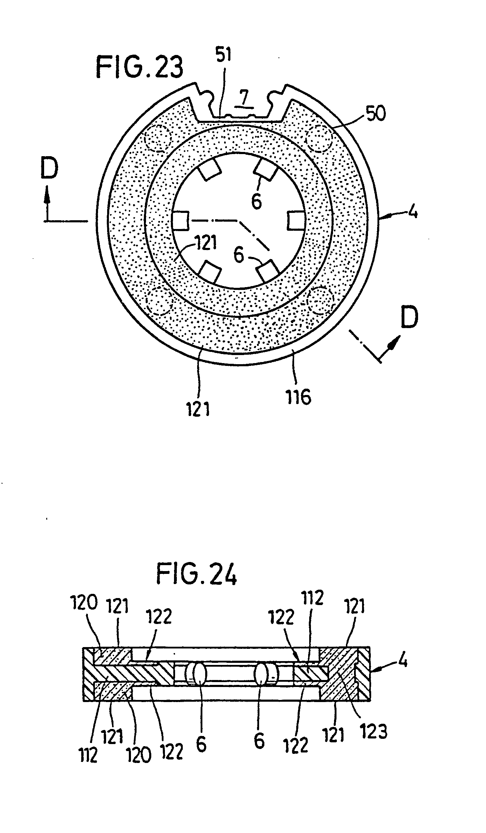

Second molded members 120 are formed on both sides of the annular plate member 112 inside the cylindrical member 111 so as to enclose the annular plate member 112 by outer annular members 121 and an inner annular members 122 as shown in Figs. 23 and 24. The second molded members 120 on both sides of the first molded body 110 are integrally connected together by connecting parts 123 formed in the holes 115 so as to prevent separation of the first molded body 110 and the second molded members 120. The first molded body 110 and the second molded members 120 have different colors, in other words, the outer ring portion 116 and the projecting members 6 appear to be the same color and the second molded members 120, i.e., the inner body appears to be the different color.

Except for the recessed portion 7, the outer cylindrical surface of the second molded members 120 which corresponds to the inner body 10 is formed by a simple round surface and the outer ring portion 116 are formed by a simple annular ring.

The bottom portion of the recess 7 of the outer ring portion 116 is formed by a flat surface 50 and wall members 51 of the second molded members 120 engaging with the flat surface 50 are also formed by a flat surface.

## Claims

1. A recording tape cartridge comprising hub means (4) for winding a recording tape (3), composed of a thick inner body (10) and an outer ring (11) having a small thickness in a radial direction and assembled around the inner body (10), characterized in that the inner body (10) has at least one recess (13;21) extending in inwardly radial direction from the outer peripheral edge and the outer ring (11) is provided for each recess with an engaging member (14;20,22) for engaging said recess so as to prevent separation of the outer ring (11) from said inner body (10).

2. The recording tape cartridge according to claim 1, wherein the outer ring (11) further comprises a recessed portion (7) for engagement of a clamping member (9) for clamping the end portion of the recording tape (3), said recessed portion (7) being formed in an engaging member (14) fitted into a recess of said inner body (10), and an injection gate (P) is formed on the bottom portion of the recessed portion (7).

3. The recording tape cartridge according to claim 1 or 2, wherein the thickness of the outer ring (11) is in a range of 0,1 mm through 5 mm.

4. The recording tape cartridge according to one of claims 1—3, wherein the color of the inner body (10) and the outer ring (11) is different.

5. The recording tape cartridge according to claim 1, wherein a plurality of said recesses are stepped recesses which are in a face-to-face contact with the corresponding engaging members (20) so as to prevent displacement between the outer ring (11) and the inner body (10) in a vertical direction.

## Patentansprüche

1. Aufnahmebandkassette mit Nabenmitteln (4) zum Spulen eines Aufnahmebandes (3), bestehend aus einem dicken Innenkörper (10) und einem Außenring (11), der in radialer Richtung geringe Dicke aufweist und um den Innenkörper (10) angeordnet ist, dadurch gekennzeichnet, daß der Innenkörper (10) mindestens eine Ausnehmung (13; 21) aufweist, die sich vom äußeren Umfangsrand radial nach innen erstreckt un daß der Außenring (11) für jede Ausnehmung ein Eingreifteil (14; 20, 22) zum Zusammengreifen mit der Ausnehmung aufweist, um die Trennung des Außenrings (11) vom Innenkörper (10) zu verhindern.

2. Aufnahmebandkassette nach Anspruch 1, bei der der Außenring (11) einen zurückgesetzten Abschnitt (7) zum Zusammengreifen mit einem Klemmstück (9) zum Festklemmen des Endabschnitts des Aufnahmebandes (3) aufweist, wobei der zurückgesetzte Abschnitt (7) in einem Eingreifteil (14) ausgebildet ist, das in einer Ausnehmung des Innenkörpers (10) eingepasst ist, und bei der eine Eingußstelle (P) im Boden des zurückgesetzten Abschnitts (7) ausgebildet ist.

3. Aufnahmebandkassette nach den Anspruch 1 oder 2, bei der die Dicke des Außenrings (11) in einem Bereich zwischen 0,1 mm und 5 mm liegt.

4. Aufnahmebandkassette nach einem der Ansprüche 1—3, bei der die Farben des Innenkörpers (10) und des Außenrings (11) verschieden sind.

5. Aufnahmebandkassette nach Anspruch 1, bei der mehrere Ausnehmungen stufenförmige Ausnehmungen sind, die in Flächenkontakt mit den entsprechenden Eingreifteilen (20) sind, um eine Verschiebung zwischen dem Außenring (11) und dem Innenkörper (10) in vertikaler Richtung zu verhindern.

## Revendications

1. Cassette pour bande d'enregistrement, comprenant des moyens formant moyeux (4) pour enrouler une bande d'enregistrement (3), composés d'un corps intérieur épais (10) et d'une couronne extérieure (11) ayant une faible épaisseur en sens radial et montée autour du corps intérieur (10), caractérisée en ce que le corps intérieur (10) a au moins un évidement (13;21) s'étendant radialement vers l'intérieur depuis le bord périphérique extérieur, et la couronne extérieure (11) possède pour chaque évidement un organe d'engagement (14;20,22) à engager dans ledit évidement de façon à empêcher la séparation de la couronne extérieure (11) et dudit corps intérieur (10).

2. Cassette pour bande d'enregistrement selon la revendication 1, dans laquelle la couronne extérieure (11) comporte en outre une partie évidée (7) pour l'engagement d'une pièce d'immobilisation (9) pour immobilise la partie extrême de la bande d'enregistrement (3), ladite partie évidée (7) étant formée dans un organe d'engagement (14) ajusté dans un évidement dudit corps intérieur (10), et une porte d'injection (P) est formée au fond de la partie évidée (7).

3. Cassette pour bande d'enregistrement selon la revendication 1 ou 2, dans laquelle l'épaisseur de la couronne extérieure (11) est comprise entre 0,1 mm et 5 mm.

4. Cassette pour bande d'enregistrement selon l'une quelconque des revendications 1 à 3, dans laquelle la couleur du corps intérieur (10) est différente de celle de la couronne extérieure (11).

5. Cassette pour bande d'enregistrement selon la revendication 1, dans laquelle plusieurs desdits évidements sont des évidements étagés en contact face-à-face avec les organes d'engagement (20) correspondants afin d'empêcher tout déplacement vertical entre la couronne extérieure (11) et le corps intérieur (10).

FIG.1

# FIG.2

# FIG.3

# FIG.4

FIG.5

FIG.6

## FIG.7

## FIG.8

FIG.9

FIG.10

6

FIG.11

FIG.12

FIG.13

FIG.14

FIG.15

FIG.16

FIG.17

FIG.18

## FIG.19

## FIG.20

# FIG.21

# FIG.22

## FIG.23

## FIG.24